# EUROPÄISCHE PATENTANMELDUNG

(11) **EP 2 202 679 A1**
(43) Veröffentlichungstag der Anmeldung: **30.06.2010**
(21) Anmeldenummer: 09003854.8
(22) Anmeldetag: 18.03.2009
(51) Int. Cl.: G06Q 10/00

(54) **Verfahren und System zur Nutzung erneuerbarer Energiequellen**

(30) Priorität: 23.12.2008 DE 102008063250
(71) Anmelder: Natcon7 Gmbh, 22453 Hamburg (DE)
(72) Erfinder: Adam, Dirk, 22339 Hamburg (DE)
(74) Vertreter: Mönkemeyer, Philipp

(57) **Zusammenfassung**

Verfahren zur Nutzung erneuerbarer Energiequellen mit mindestens einer dezentralen Energieerzeugungsanlage, die mit einer emeuerbaren Energiequelle betreibbar ist,
• einer Ertragsmesseinrichtung am Ort der mindestens einen dezentralen Energieerzeugungsanlage, die den Ertrag der mindestens einen dezentralen Energieerzeugungsanlage misst,
• einer zentralen Steuereinrichtung,

wobei das Verfahren die folgenden Schritte aufweist:
a.) Erstellen einer Ertragsprognose für den Ertrag der mindestens einen dezentralen Energieerzeugungsanlage in einem zukünftigen Zeitraum,
b.) Übermitteln der Ertragsprognose an die zentrale Steuereinrichtung über ein Computemetzwerk,
c.) Betreiben der dezentralen Energieerzeugungsanlage und Messen des Ertrags mit der Ertragsmesseinrichtung,
d.) Vergleichen des gemessenen Ertrags mit der Ertragsprognose,
e.) Benachrichtigen eines Betreibers der mindestens einen Energieerzeugungsanlage, falls der gemessene Ertrag über ein vorgebbares Maß hinaus von der Ertragsprognose abweicht.

## Beschreibung

Die Erfindung betrifft ein Verfahren und ein System zur Nutzung erneuerbarer Energiequellen. Zu diesem Zweck werden unterschiedliche Energieerzeugungsanlagen, die mit einer erneuerbaren Energiequelle betrieben werden, eingesetzt. Hierzu zählen insbesondere Biogasanlagen, Geothermieanlagen, Fotovoltaik- oder Sonnenkollektoranlagen, Wasserkraft- und Windenergieanlagen. Diese Energieerzeugungsanlagen wandeln die von den erneuerbaren Energiequellen zur Verfügung gestellte Energie insbesondere in elektrische Energie oder Wärmeenergie um, die der weiteren Nutzung einfach zugänglich ist.

Sowohl bei der Nutzung der genannten Energiequellen in Inselnetzen als auch bei der Einspeisung der zur Verfügung gestellten Energie in öffentliche Versorgungsnetze stellt die nur bedingt mögliche Regelbarkeit und Vorhersagbarkeit der Energieerzeugung eine große Herausforderung dar. Ein wesentlicher Grund für die eingeschränkte Regel- und Vorhersagbarkeit der Energieerzeugung besteht in der schwankenden Verfügbarkeit des "solaren Brennstoffes", beispielsweise in einem schwankenden Windangebot. Zur Linderung dieser Probleme ist die Erstellung von Prognosen bekannt, die sich beispielsweise auf eine Wettervorhersage gründen. Das Erstellen derartiger Prognosen ist jedoch schwierig und ob der gewünschte Erfolg, nämlich eine korrekte Voraussage der im Prognosezeitraum tatsächlich zur Verfügung gestellten Energie, eintritt, ist von vielen Einflussfaktoren abhängig.

Ein weiterer Grund für die eingeschränkte Plan- und Vorhersagbarkeit der erzeugten Energie ist die in der Regel dezentrale Struktur. Beispielsweise ist die Energieerzeugung einer in einem abgelegenen landwirtschaftlichen Betrieb befindlichen Biogasanlage zusätzlich davon abhängig, wie der lokal verantwortliche Betreiber die Anlage betreibt. In der Regel berücksichtigt der Betreiber im Wesentlichen nur prozess- und anlagentechnische Besonderheiten und die an seinem Standort gegebenen Rahmenbedingungen. Zusätzlich kann er durch vielfältige sonstige, nicht auf die Technik zurückzuführende Zwänge daran gehindert sein, das auf Grundlage des verfügbaren, nachwachsenden Rohstoffs gegebene Energieerzeugungspotenzial voll auszuschöpfen.

Die genannten Schwierigkeiten der Plan- und Vorhersagbarkeit der Energieerzeugung sind für den Nutzen und die Akzeptanz der erneuerbaren Energiequellen von Nachteil. Insbesondere können sie ein Vorhalten schnell verfügbarer Reserveenergien sowie einen Ausbau der Versorgungsnetze erforderlich machen.

Davon ausgehend ist es die Aufgabe der Erfindung, ein Verfahren und ein System zur Nutzung erneuerbarer Energiequellen zur Verfügung zu stellen, das die planmäßige Nutzung der erneuerbaren Energiequellen vereinfacht und die Plan- und Vorhersagbarkeit der tatsächlich zur Verfügung gestellten Energie verbessert.

Diese Aufgabe wird gelöst durch das Verfahren mit den Merkmalen des Anspruchs 1. Vorteilhafte Ausgestaltungen sind in den sich anschließenden Unteransprüchen angegeben.

Das erfindungsgemäße Verfahren dient zur Nutzung erneuerbarer Energiequellen und benötigt mindestens eine dezentrale Energieerzeugungsanlage, die mit einer erneuerbaren Energiequelle betreibbar ist, eine Ertragsmesseinrichtung am Ort der mindestens einen dezentralen Energieerzeugungsanlage, die den Ertrag der mindestens einen dezentralen Energieerzeugungsanlage misst, und eine zentrale Steuereinrichtung. Das Verfahren weist die folgenden Schritte auf:
a.) Erstellen einer Ertragsprognose für den Ertrag der mindestens einen dezentralen Energieerzeugungsanlage in einem zukünftigen Zeitraum,
b.) Übermitteln der Ertragsprognose an die zentrale Steuereinrichtung über ein Computernetzwerk,
c.) Betreiben der dezentralen Energieerzeugungsanlage und Messen des Ertrags mit der Ertragsmesseinrichtung,
d.) Vergleichen des gemessenen Ertrags mit der Ertragsprognose,
e.) Automatisches Benachrichtigen eines Betreibers der mindestens einen Energieerzeugungsanlage, falls der gemessene Ertrag über ein vorgebbares Maß hinaus von der Ertragsprognose abweicht.

Die Ertragsmesseinrichtung misst eine für den Ertrag der Energieerzeugungsanlage aussagekräftige Größe, beispielsweise eine in einem bestimmten Zeitintervall in ein Versorgungsnetz eingespeiste elektrische Energiemenge oder bereitgestellte Wärmemenge. Bevorzugt erfolgt eine kontinuierliche Messung einer zur Verfügung gestellten Leistung der Energieerzeugungsanlage, beispielsweise eine an einem Stromwandler oder Generator gemessene elektrische Brutto-Leistung oder eine in ein elektrisches Netz eingespeiste Leistung. Eine solche Lastgangmessung, also die Messung einer momentanen Leistung, liefert ein besonders genaues Bild der Betriebsverhältnisse der Energieerzeugungsanlage.

Die zentrale Steuereinrichtung kann insbesondere ein Computer sein, der an ein elektronisches Netzwerk angeschlossen ist. Die Steuereinrichtung hat eine koordinierende Funktion bei der Verwaltung einer an sie übermittelten Ertragsprognose und bei der automatischen Benachrichtigung des Betreibers. Eine darüber hinausgehende, im engeren Sinne steuernde Funktion hat die zentrale Steuereinrichtung nur in besonderen Ausgestaltungen der Erfindung. Der Begriff Steuereinrichtung ist daher in einem weiten Sinne zu verstehen.

Der von der Ertragsprognose abgedeckte zukünftige Zeitraum ist fest vorgegeben und kann beispielsweise eine Stunde, eine Woche oder bevorzugt einen Tag betragen. Dabei ist der Zeitraum in kleinere Zeitintervalle unterteilt, die beispielsweise eine Minute, eine Stunde oder bevorzugt 15 Minuten umfassen. Die Ertragsprognose enthält für jedes Zeitintervall eine Angabe über den voraussichtlichen Ertrag der Energieerzeugungsanlage. Die Angabe kann wie der von der Ertragsmesseinrichtung gemessene Ertrag eine in dem Zeitintervall zur Verfügung gestellte Energiemenge oder eine für das jeweilige Zeitintervall bereitzustellende Leistung sein. Die Ertragsprognose kann sich auf diese Ertrags- bzw. Leistungsdaten beschränken und unabhängig von meteorologischen Daten allein auf Grundlage von Kenntnissen und Erfahrungswerten über die jeweilige Energieerzeugungsanlage erstellt werden.

Für die Übermittlung der erstellten Ertragsprognose an die zentrale Steuereinrichtung ist ein Computernetzwerk vorgesehen, insbesondere unter Einbeziehung des Internets. Es kann jedoch auch ein beliebiges anderes wide area network (WAN) genutzt werden, beispielsweise ein Mobilfunknetz oder ein Telefonfestnetz.

Der während des Betriebs der dezentralen Energieerzeugungsanlage von der Ertragsmesseinrichtung gemessene Ertrag wird in einem weiteren Verfahrensschritt mit der entsprechenden Angabe der Ertragsprognose verglichen. Dieser Vergleich kann entweder in der zentralen Steuereinrichtung erfolgen, was eine Übermittlung der von der Ertragsmesseinrichtung gemessenen Erträge von der dezentralen Energieerzeugungsanlage an die zentrale Steuereinrichtung erfordert, insbesondere über ein Computernetzwerk.

Bevorzugt erfolgt der Vergleich am Ort der mindestens einen dezentralen Energieerzeugungsanlage, d.h. lokal, insbesondere innerhalb der Ertragsmesseinrichtung oder einer daran angebundenen sonstigen Steuereinheit. In diesem Fall wird die Ertragsprognose, insbesondere über ein Computernetzwerk, von der zentralen Steuereinrichtung an den Ort der Energieerzeugungsanlage, insbesondere an die Ertragsmesseinrichtung oder eine dort angeordnete sonstige Steuereinheit übermittelt. Liegt die Ertragsprognose für einen Zeitraum von beispielsweise einem Tag am Ort der Energieerzeugungsanlage vor, kann der Vergleich innerhalb dieses Zeitraums unabhängig von der Verfügbarkeit der Kommunikation mit der zentralen Steuereinheit erfolgen. Auch wenn während einer Kommunikationsstörung keine Benachrichtigung des Betreibers über die zentrale Steuereinrichtung möglich ist, kann dennoch eine lückenlose Überwachung erfolgen, indem Abweichungen zwischen Ertragsprognose und tatsächlichem Ertrag lokal aufgezeichnet werden. Zweckmäßigerweise können die laufend berechneten Werte der Differenz zwischen gemessenem Ertrag und Ertragsprognose kontinuierlich aufgezeichnet und gespeichert werden.

Falls der gemessene Ertrag über ein vorgebbares Maß hinaus von der Ertragsprognose abweicht, wird ein Betreiber, der für den Betrieb der mindestens einen dezentralen Energieerzeugungsanlage verantwortlich ist, automatisch benachrichtigt. Das vorgebbare Maß der Abweichung kann insbesondere über obere und untere Grenzwerte vorgegeben sein. Die maximal zulässige Abweichung von der Ertragsprognose kann beispielsweise in Form einer prozentualen Abweichung vom prognostizierten Ertrag vorgegeben sein, wobei für die maximal zulässigen Abweichungen nach oben und nach unten unterschiedliche Vorgaben gemacht werden können. Es können auch in jeder Richtung (Abweichung nach oben oder nach unten) zwei oder mehr unterschiedliche Grenzwerte vorgegeben werden. Beispielsweise können beim Überschreiten eines ersten Grenzwerts, der einer relativ geringen Abweichung von der Ertragsprognose entspricht, und beim Überschreiten eines zweiten Grenzwerts, der einer relativ großen Abweichung entspricht, unterschiedliche Benachrichtigungstypen vorgesehen sein, beispielsweise ein Warnhinweis und ein Alarm, oder eine konkrete Handlungsaufforderung.

Die automatische Benachrichtigung erfolgt bevorzugt über ein Computernetzwerk, insbesondere kann ein Telefon- oder Mobilfunknetz verwendet werden. Die Benachrichtigung kann beispielsweise in Form einer E-Mail oder einer SMS an den Betreiber gesendet werden.

Durch das erfindungsgemäße Verfahren wird die Planbarkeit der Energieerzeugung wesentlich verbessert. Zum einen zwingt das Erstellen einer Ertragsprognose den jeweils Verantwortlichen dazu, sich sehr konkret für jedes Zeitintervall des Prognosezeitraums mit dem Betrieb der Anlage auseinanderzusetzen. Zum anderen ermöglicht die automatische Benachrichtigung des Betreibers, sofort auf eine Abweichung von den erwarteten Betriebsverhältnissen der Energieerzeugungsanlage zu reagieren. Dadurch kann beispielsweise eine technische Störung der Anlage sehr schnell erkannt und nach Möglichkeit vom Betreiber behoben werden.

Ein besonderer Vorteil des Verfahrens dabei ist, dass es mit sehr einfachen Mitteln durchgeführt werden kann. Die Überwachung des Anlagenbetriebs erfolgt durch Ausnutzung der Ertragsmesseinrichtung, die bei bestehenden Energieerzeugungsanlagen, die die erzeugte Energie in ein öffentliches Versorgungsnetz einspeisen, bereits vorhanden ist. Daher wird für die Überwachung der Energieerzeugungsanlage keine zusätzliche Messtechnik benötigt. Das Erstellen und Übermitteln der Ertragsprognose sowie die Verwirklichung einer geeigneten zentralen Steuereinrichtung ist ebenfalls mit geringem apparativem Aufwand möglich.

In einer Ausgestaltung des Verfahrens wird die Ertragsprognose von einer Person erstellt, die für den Betrieb der mindestens einen dezentralen Energieerzeugungsanlage vor Ort verantwortlich ist. Wegen der erfindungsgemäß vorgesehenen Übermittlung der Ertragsprognose an die zentrale Steuereinrichtung über ein Computernetzwerk kann die Ertragsprognose grundsätzlich an einem beliebigen Ort erstellt werden. Bevorzugt berücksichtigt die Ertragsprognose anlagen- und standortspezifische Besonderheiten, über welche die für den lokalen Anlagenbetrieb Verantwortlichen erfahrungsgemäß weitaus genauer informiert sind, als andere für die Erstellung der Ertragsprognose in Betracht kommende Personengruppen, etwa Vertriebsverantwortliche einer Betreiber- oder Vermarktungsgesellschaft. Das Verfahren ermöglicht, dieses lokale Know-how auf einfache Weise zur Verbesserung der Planbarkeit des Anlagenbetriebs einzusetzen.

Eine Ausgestaltung des Verfahrens sieht vor, dass die Ertragsprognose mit Hilfe eines Computernetzwerkes erstellt wird. Zusätzlich zur vorgesehenen Übermittlung der Ertragsprognose über ein Computernetzwerk wird auch die Erstellung der Ertragsprognose selbst dadurch vereinfacht. Insbesondere ist daran gedacht, ein Web-Interface zur Verfügung zu stellen, das ein Erstellen der Ertragsprognose mit einem gewöhnlichen Internetbrowser ermöglicht. Dadurch sind die technischen Vorkehrungen zur Erstellung der Ertragsprognose sehr einfach und vielerorts unmittelbar verfügbar. Beispielsweise kann eine für den lokalen Betrieb der Energieerzeugungsanlage verantwortliche Person eine Ertragsprognose am Wochenende von zuhause aus oder während einer Geschäftsreise aus einem Hotel erstellen.

In einer Ausgestaltung umfasst die Ertragsprognose eine zu erzeugende Wirk-und/oder Blindleistung und/oder zu erbringende Netzsystemdienstleistungen. Grundsätzlich können die Angaben der Ertragsprognose für den Betrieb der dezentralen Energieerzeugungsanlage sehr einfach sein, etwa lediglich in einer Ein/Aus-Information bestehen. Es ist jedoch auch möglich, differenzierte Angaben zu machen, etwa Zahlenwerte für die Wirk- oder Blindleistung. Darüber hinaus ist auch daran gedacht, das Verfahren zur besseren Planbarkeit von Netzsystemdienstleistungen einzusetzen. Diese umfassen insbesondere eine Wirkleistungsregelung, eine Blindleistungsregelung, eine Frequenzregelung und/oder eine Spannungsregelung. Die genannten Netzsystemdienstleistungen sind beim Betrieb von Inselnetzen und auch beim Betrieb öffentlicher Netze unter Umständen stark nachgefragt und dringend erforderlich, um einen stabilen Netzbetrieb zu ermöglichen. Die Netzsystemdienstleistungen können grundsätzlich auch von dezentralen Energieerzeugungsanlagen, die mit erneuerbaren Energiequellen betrieben werden, erbracht werden. Daher sieht die Erfindung vor, entsprechende Angaben in die Ertragsprognose zu integrieren. Dadurch kann die Planbarkeit auch der Netzsystemdienstleistungen optimiert werden.

In einer Ausgestaltung erstellt die zentrale Steuereinrichtung auf Grundlage der Ertragsprognose einen Fahrplan für die mindestens eine dezentrale Energieerzeugungseinrichtung und der Fahrplan wird von der zentralen Steuereinrichtung über ein Computernetzwerk an eine dezentrale Steuereinheit übermittelt, die die mindestens eine dezentrale Energieerzeugungsanlage automatisch nach Maßgabe des Fahrplans steuert.

Der Fahrplan enthält Angaben, die denjenigen der zuvor erstellten Ertragsprognose entsprechen, d.h. beispielsweise konkrete Vorgaben für die Soll- und Blindleistung in den einzelnen Zeitintervallen des Planungszeitraums. Im einfachsten Fall gleichen die Vorgaben des Fahrplans den Angaben der Ertragsprognose. Es können jedoch in dem Fahrplan auch abweichende Vorgaben gemacht werden. Dann erfolgt der Vergleich des gemessenen Ertrags nicht mit der Ertragsprognose, sondern mit dem darauf aufbauenden Fahrplan. Der Betreiber wird benachrichtigt, falls der Fahrplan nicht eingehalten wird.

Das automatische Steuern der mindestens einen dezentralen Energieerzeugungsanlage erfolgt durch die dezentrale Steuereinheit. Das heißt, dass der Fahrplan grundsätzlich ohne weiteres manuelles Zutun automatisch abgearbeitet werden kann. Zumindest bei einer Änderung einer Vorgabe für den Betrieb der Anlage von einem gegebenen Zeitintervall zum nächsten Zeitintervall ist kein manueller Eingriff in die Betriebsführung der Anlage notwendig. Dennoch kann für den fahrplanmäßigen Betrieb der dezentralen Energieerzeugungsanlage die Mitwirkung eines Betreibers erforderlich sein, beispielsweise um nachwachsende Rohstoffe in den Fermenter einer Biogasanlage einzubringen.

Durch die automatische Abarbeitung des Fahrplans wird der tatsächliche Anlagenbetrieb weniger von alltäglichen, unvorhersehbaren Zufällen beeinträchtigt. Beispielsweise wird eine für einen bestimmten Zeitpunkt durch den Fahrplan vorgegebene Leistungssteigerung zuverlässig ausgeführt, auch wenn der Anlagenbetreiber beispielsweise aufgrund einer Erkrankung oder auch nur eines Telefongesprächs verhindert ist. Dies trägt wesentlich dazu bei, dass die Energieerzeugung wie geplant stattfindet. Gleichzeitig wird der Betrieb der Energieerzeugungsanlage wesentlich vereinfacht und der Betreiber von seinen Steuerungsaufgaben entlastet.

Gemäß einer Ausgestaltung erfolgt bei der Erstellung des Fahrplans in der zentralen Steuereinrichtung ein Vergleich der Ertragsprognose mit einem prognostizierten Bedarf, und der Fahrplan wird gegebenenfalls abweichend von der Ertragsprognose an den prognostizierten Bedarf angepasst erstellt. Dies ermöglicht, eine zentral vorliegende Bedarfsprognose in einfacher Weise beim Anlagenbetrieb zu berücksichtigen. Insbesondere kann bei einer Ertragsprognose, die einen prognostizierten Bedarf überschreitet, problemlos eine Reduzierung der Angaben für den Fahrplan erfolgen, ohne dass dies die planmäßige Abarbeitung des Fahrplans gefährdet. Ergänzend ist es auch möglich, die vorgenommene Reduzierung der Vorgaben im Fahrplan gegenüber der Ertragsprognose zu speichern, insbesondere in der zentralen Steuereinheit. Es kann dann davon ausgegangen werden, dass die vorgenommene Reduzierung einer verfügbaren Reserve entspricht, die bei Bedarf abrufbar ist.

In einer Ausgestaltung weist die dezentrale Steuereinheit eine Überwachungseinrichtung auf, die Betriebsdaten und/oder Umgebungsbedingungen der mindestens einen dezentralen Energieerzeugungsanlage überwacht und über ein Computernetzwerk an die zentrale Steuereinrichtung übermittelt. Die überwachten Betriebsdaten umfassen beispielsweise die erzeugte Wirk- und/oder Blindleistung oder eine in einem Gasspeicher einer Biogasanlage vorgehaltene Gasmenge. Die Betriebsdaten können über die von der Ertragsmesseinrichtung zur Verfügung gestellten, den Ertrag betreffenden Daten hinausgehen. Zu den Umgebungsbedingungen zählen unter anderem meteorologischen Daten wie die Temperatur oder die Windstärke. Die Überwachung der genannten Daten erlaubt eine zusätzliche Kontrolle, ob der Betrieb der Anlage entsprechend der Ertragsprognose bzw. entsprechend dem Fahrplan stattfindet. Darüber hinaus können zusätzliche Überwachungsmaßnahmen des Anlagenbetriebs erfolgen und gegebenenfalls relevante Vorkommnisse automatisch dem Betreiber anhand einer Benachrichtigung mitgeteilt werden.

Gemäß einer Ausgestaltung ist eine Vielzahl von dezentralen Energieerzeugungsanlagen vorhanden, die mit erneuerbaren Energiequellen betrieben werden, wobei eine entsprechende Anzahl von Ertragsprognosen und/oder Fahrplänen erstellt wird. Einerseits werden dadurch die bereits im Einzelnen geschilderten Vorteile des Verfahrens gleichzeitig bei einer Vielzahl von Energieerzeugungsanlagen erreicht, wobei nur eine einzige zentrale Steuereinrichtung erforderlich ist. Andererseits wird durch die Bündelung mehrerer dezentraler Energieerzeugungsanlagen die Planbarkeit der Energieerzeugung weiter verbessert, weil gegebenenfalls vorhandene Abweichungen von einzelnen Ertragsprognosen bzw. Fahrplänen weniger ins Gewicht fallen. Es ist möglich, einen Teil der Anlagen durch Vorgeben von Fahrplänen automatisch zu steuern, und einen anderen Teil der Anlagen lediglich durch Erfassung der Ertragsprognosen und Überwachung anhand der Ertragsmesseinrichtungen in das System einzubeziehen. Dadurch können Energieerzeugungsanlagen mit unterschiedlichen technischen Voraussetzungen eingebunden werden.

In einer Ausgestaltung erfolgt keine Benachrichtigung des Betreibers, wenn anhand der von der Überwachungseinrichtung übermittelten Daten eine Ursache für die Abweichung des gemessenen Ertrags von der Ertragsprognose bzw. von einem auf Grundlage der Ertragsprognose erstellten Fahrplan erkennbar ist, auf die der Betreiber keinen Einfluss hat. Liegt beispielsweise eine Ertragsprognose vor, die den Betrieb einer Windenergieanlage mit Nennleistung vorsieht, und weisen die Daten zur Windgeschwindigkeit der Überwachungseinrichtung eine Flaute aus, ist klar, dass der Betreiber seine Ertragsprognose wegen der vorliegenden Windverhältnisse nicht einhalten kann. In diesem Fall kann auf eine Benachrichtigung des Betreibers verzichtet werden.

In einer Ausgestaltung wird ein Fahrplan angepasst, wenn der Vergleich eines gemessenen Ertrags und/oder der von der Überwachungseinrichtung überwachten Betriebsdaten mit einer Ertragsprognose bzw. einem auf Grundlage der Ertragsprognose erstellten Fahrplan Abweichungen aufzeigt. Dadurch kann den festgestellten Fahrplanabweichungen entgegengewirkt werden. Wenn beispielsweise eine dezentrale Energieerzeugungsanlage hinter der zugehörigen Ertragsprognose bzw. dem zugehörigen Fahrplan zurückbleibt, kann durch Änderung des Fahrplans einer anderen dezentralen Energieerzeugungsanlage eine Kompensation erfolgen.

Dabei kann insbesondere die in der zentralen Steuereinrichtung vorhandene Kenntnis über die Möglichkeit der Erhöhung der Vorgaben der anderen Energieerzeugungsanlage ausgenutzt werden, etwa wenn wie oben geschildert zuvor eine Reduzierung der für die andere Energieerzeugungsanlage vorliegenden Ertragsprognose vorgenommen wurde. Durch die alternativ oder zusätzlich vorgesehene Berücksichtigung der Betriebsbedingungen bei dem Vergleich ist es außerdem möglich, zu prognostizieren, welchen weiteren Verlauf die festgestellten Abweichungen nehmen werden. Zeigen die überwachten Betriebsbedingungen eine technische Störung der Anlage, kann daraus geschlossen werden, dass ein fahrplanmäßiger Betrieb für einen gewissen Zeitraum nicht mehr möglich sein wird. Es ist dann möglich, den Fahrplan der von der Störung betroffenen Anlage entsprechend anzupassen, d.h. beispielsweise alle Vorgaben auf Null zu setzen. Gleichzeitig kann eine Kompensation mit Hilfe einer anderen bereits im Betrieb befindlichen Energieerzeugungsanlage oder einer zusätzlich in Betrieb zu nehmenden Energieerzeugungsanlage erfolgen, was wiederum durch eine Änderung der jeweiligen Fahrpläne erfolgt. Dadurch, dass auch der Fahrplan der von der Abweichung betroffenen Energieerzeugungsanlage angepasst wird, kann die Energieerzeugung insgesamt entsprechend den in der zentralen Steuereinrichtung vorliegenden Fahrplänen erfolgen. Es ist ausgeschlossen, dass eine beispielsweise von einer Störung betroffene Anlage wieder in Betrieb genommen wird, ohne dass dies zuvor durch einen entsprechenden Fahrplan berücksichtigt werden konnte. Es kann vorgesehen sein, die von den Änderungen einzelner Fahrpläne betroffenen Betreiber automatisch über die Änderungen zu benachrichtigen.

Die obige Aufgabe wird ebenfalls gelöst durch das System mit den Merkmalen des Anspruchs 12. Vorteilhafte Ausgestaltungen des Systems sind in den sich anschließenden Unteransprüchen angegeben.

Das System dient zur Nutzung erneuerbarer Energiequellen und hat
- mindestens eine dezentrale Energieerzeugungsanlage, die mit einer erneuerbaren Energiequelle betreibbar ist,
- eine Ertragsmesseinrichtung am Ort der mindestens einen dezentralen Energieerzeugungsanlage, die den Ertrag der mindestens einen dezentralen Energieerzeugungsanlage misst,
- eine Einrichtung zum Erfassen einer Ertragsprognose für den Ertrag der mindestens einen dezentralen Energieerzeugungsanlage in einem zukünftigen Zeitraum,
- eine Einrichtung zum Übermitteln der Ertragsprognose an die zentrale Steuereinrichtung über ein Computernetzwerk,
- eine Einrichtung zum Vergleichen des gemessenen Ertrags mit der Ertragsprognose und
- eine Einrichtung zum Benachrichtigen eines Betreibers der mindestens einen Energieerzeugungsanlage, die so ausgebildet ist, dass automatisch eine Benachrichtigung des Betreibers erfolgt, falls der gemessene Ertrag über ein vorgebbares Maß hinaus von der Ertragsprognose abweicht.

Das System eignet sich insbesondere zur Ausführung des erfindungsgemäßen Verfahrens. Hinsichtlich der Erläuterung der verwendeten Begriffe und mit dem System erreichbaren Vorteil wird auf die obigen Erläuterungen des Verfahrens verwiesen.

In einer Ausgestaltung ist die mindestens eine dezentrale Energieerzeugungsanlage eine Biogasanlage und/oder es ist eine Vielzahl von dezentralen Energieerzeugungsanlagen vorhanden, die mit erneuerbaren Energiequellen betreibbar sind. Eine Biogasanlage bietet den besonderen Vorteil, dass ihr Betrieb innerhalb gewisser Grenzen besser planbar ist als beispielsweise der einer Fotovoltaikanlage. Dies liegt daran, dass die Biogasanlage zwar sehr wohl vom lokal verfügbaren, in der Biogasanlage umzusetzenden, nachwachsenden Rohstoff abhängig ist, dieser jedoch häufig mit einer gewissen Regelmäßigkeit anfällt und zudem lagerfähig ist. Gleiches gilt für das erzeugte Biogas, das gegebenenfalls in der Anlage zwischengespeichert werden kann. Aus diesem Grund kann eine Ertragsprognose besonders zuverlässig erstellt bzw. ein vorgegebener Fahrplan besonders zuverlässig abgearbeitet werden.

Die Erfindung wird nachfolgend anhand von zwei in Figuren dargestellten Ausführungsbeispielen näher erläutert. Es zeigen:
Fig. 1 ein erstes Ausführungsbeispiel eines einfachen erfindungsgemäßen Systems;
Fig. 2 ein zweites Ausführungsbeispiel eines komplexeren erfindungsgemäßen Systems.

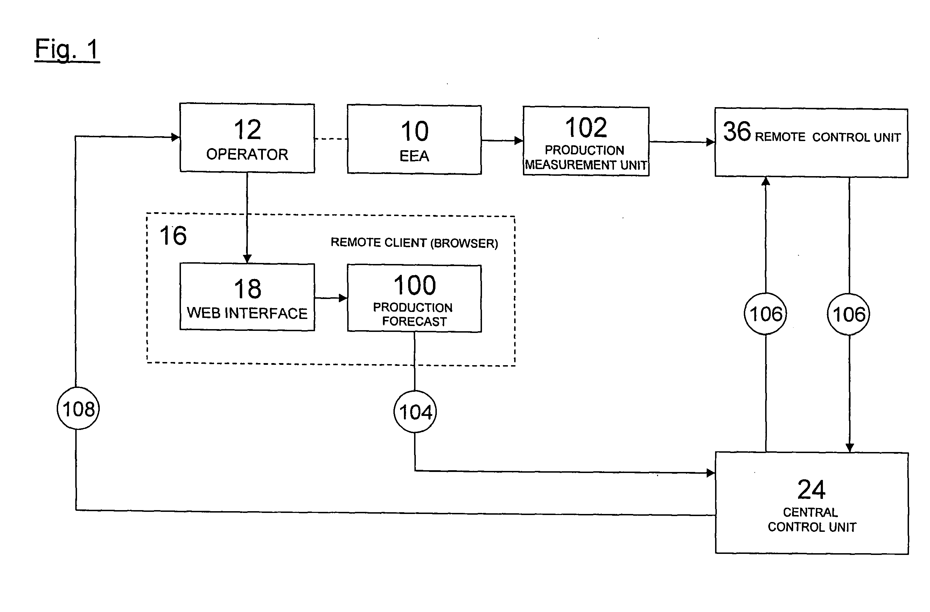

Figur 1 zeigt ein System mit einer Energieerzeugungsanlage 10, die mit einer erneuerbaren Energiequelle betrieben wird. Wie durch die gestrichelte Linie angedeutet, wird die Energieerzeugungsanlage 10 von einem Betreiber 12 betrieben, der die Energieerzeugungsanlage 10 steuert.

Der Betreiber 12 erstellt über ein Web-Interface 18 eine Ertragsprognose 100. Dies geschieht mit Hilfe eines Computernetzwerkes und eines Internetbrowsers 16.

Die Ertragsprognose 100 wird über ein wide area network 104, im Beispiel über das Internet, an eine zentrale Steuereinrichtung 24 übermittelt. Eine Ertragsmesseinrichtung 102 ist mit der Energieerzeugungsanlage 10 verbunden und misst laufend die von der Energieerzeugungsanlage 10 in ein öffentliches Versorgungsnetz eingespeiste elektrische Wirk- und Blindleistung. Diese Daten werden an eine dezentrale Steuereinheit 36 übermittelt, die am Ort der Energieerzeugungsanlage 10 angeordnet ist. Von der dezentralen Steuereinheit 36 werden sie über ein Computernetzwerk 106, im Beispiel wiederum über das Internet, an die zentrale Steuereinrichtung 24 übermittelt. Wie der zweite Pfeil zwischen der zentralen Steuereinrichtung 24 und der dezentralen Steuereinheit 36 andeutet, werden in der Gegenrichtung ebenfalls Daten übertragen, nämlich die der Ertragsprognose 100. In der dezentralen Steuereinheit 36 erfolgt ein Vergleich der gemessenen Erträge mit der Ertragsprognose 100. Es kann dabei die Ertragsprognose 100 für den gesamten Prognosezeitraum in der dezentralen Steuereinheit 36 vorliegen, oder lediglich ein für einen aktuellen Zeitraum gültiger Teil. Beispielsweise können die Ertragsrognosen 100 für jeweils eine Woche erstellt und an die zentrale Steuereinrichtung 24 übertragen werden, und für den Vergleich in der dezentralen Steuereinheit 36 wird jeweils nur ein Tageszeitraum der Ertragsprognose 100 von der zentralen Steuereinheit 24 zur dezentralen Steuereinheit 36 übermittelt. Wird dabei eine Abweichung festgestellt, d.h. weicht der gemessene Ertrag nach oben oder unten über ein vorgegebenes Maß hinaus von der Ertragsprognose 100 ab, erfolgt eine automatische Benachrichtigung des Betreibers 12 der Energieerzeugungsanlage 10 über ein Computernetzwerk 108, im Beispiel über ein Mobilfunknetz. Die Benachrichtigung kann beispielsweise durch Versand einer SMS erfolgen.

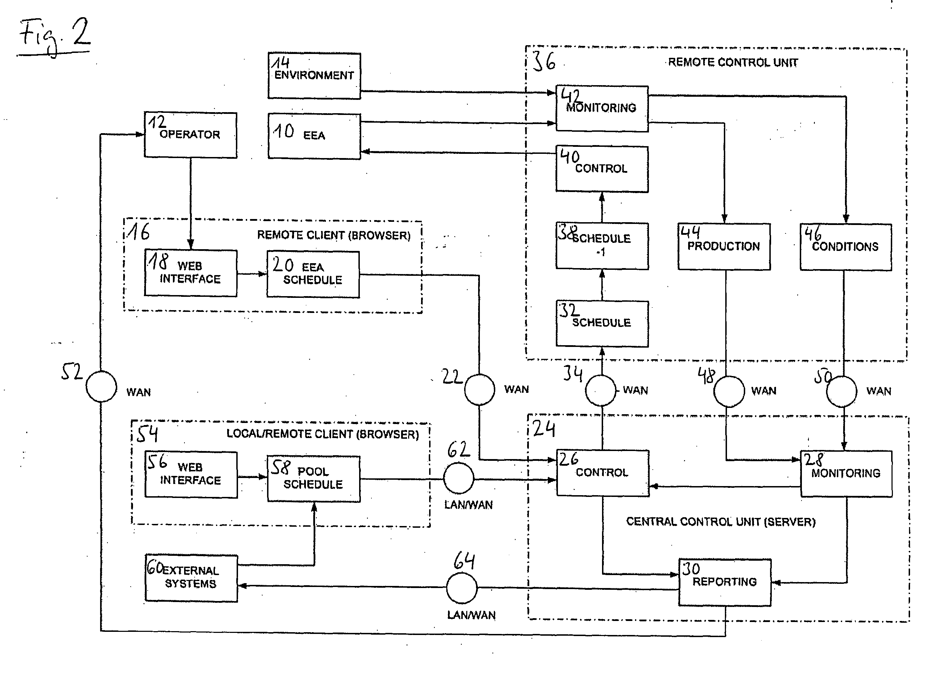

Das in der Figur 2 dargestellte System weist eine Energieerzeugungsanlage 10 auf, die mit erneuerbaren Energien betrieben wird. Im Beispiel handelt es sich um eine Biogasanlage. Für den Betrieb der Energieerzeugungsanlage 10 ist der Betreiber 12 verantwortlich. Dabei unterliegt der Betrieb der Energieerzeugungsanlage 10 Umgebungsbedingungen 14, beispielsweise einer bestimmten Außentemperatur. Die Energieerzeugungsanlage 10 kann an ein Inselnetz oder an ein öffentliches Versorgungsnetz angeschlossen sein.

Der für den Betrieb der Energieerzeugungsanlage 10 lokal verantwortliche Betreiber 12 erstellt mit Hilfe eines Internetbrowsers 16 über ein Web-Interface 18 eine Ertragsprognose, die zugleich ein Vorschlag für den Betrieb seiner Anlage im Prognosezeitraum ist. Daher wird die Ertragsprognose nachfolgend als Fahrplanvorschlag 20 bezeichnet. Der Fahrplanvorschlag enthält Vorgaben für den Betrieb der Energieerzeugungsanlage 10. Im dargestellten Beispiel betreffen diese Vorgaben die von der Energieerzeugungsanlage 10 zur Verfügung zu stellende elektrische Wirkleistung sowie eine thermische Leistung. Für beide Leistungswerte umfasst der Fahrplan Sollwerte, die jeweils für ein Zeitintervall von fünfzehn Minuten konstant sind. Der gesamte Fahrplanvorschlag 20 deckt einen Zeitraum von einem Tag ab und enthält somit 96 Vorgaben für jeden der beiden Leistungswerte. Der Intemetbrowser 16 ist über ein Computernetzwerk 22, hier das Internet, mit der zentralen Steuereinrichtung 24 verbunden. Die zentrale Steuereinrichtung 24 umfasst ein Steuermodul 26, ein Überwachungsmodul 28 und ein Berichtswesenmodul 30.

In der zentralen Steuereinrichtung 24 wird der Fahrplanvorschlag 20 unter Berücksichtigung von Prognosen für die Betriebsbedingungen der Energieerzeugungsanlage 10 und unter Berücksichtigung eines prognostizierten Bedarfs als Grundlage für die Erstellung eines Fahrplans 32 verwendet. Dieser Fahrplan 32 wird über ein Computernetzwerk 34 an eine dezentrale Steuereinheit 36 übermittelt.

Der übermittelte Fahrplan 32 wird in der dezentralen Steuereinheit 36 zunächst gespeichert. Die dezentrale Steuereinheit 36 enthält einen weiteren Fahrplan 38, der als "Fahrplan - 1" bezeichnet wird und der zum Zeitpunkt der Übermittlung des Fahrplans 32 noch abgearbeitet wird. Dieser betrifft den aktuellen Tag, während der Fahrplan 32 für den Folgetag gilt. Die dezentrale Steuereinheit 36 weist ein Steuermodul 40 auf, das ausgehend von den Informationen des aktuellen "Fahrplans - 1" 38 Steuerbefehle unmittelbar in die Betriebsführung der Energieerzeugungsanlage 10 abgibt. Auf diese Weise wird sichergestellt, dass die Energieerzeugungsanlage 10 entsprechend dem aktuellen Fahrplan 33 betrieben wird.

Ebenfalls in der Figur dargestellt ist die vorgesehene Überwachung des Zustands der Energieerzeugungsanlage 10. Zu diesem Zweck weist die dezentrale Steuereinheit 36 eine Überwachungseinrichtung 42 auf, die mit Hilfe von nicht dargestellten Sensoren einerseits die Umgebungsbedingungen 14 erfasst. Zusätzlich erfasst die Überwachungseinrichtung 42 Betriebsdaten der Energieerzeugungsanlage 10. Hierzu zählen insbesondere die aktuell zur Verfügung gestellte Wirkleistung, die aktuell zur Verfügung gestellte Blindleistung oder sonstige für den Betrieb der Energieerzeugungsanlage wichtige Faktoren, etwa die Menge eines vorgehaltenen Brennstoffs oder die Temperatur in einem Fermenter. Diesbezüglich ist in der Figur dargestellt, dass die Überwachungseinrichtung 42 die überwachten Größen getrennt nach die Produktion der Energieerzeugungsanlage betreffenden Größe 44 und sonstigen Betriebsbedingungen 46 zur Verfügung stellt und über gesonderte Computemetzwerke 48 und 50 an die zentrale Steuereinrichtung 24, genauer an das darin befindliche Überwachungsmodul 28, weiterleitet. Natürlich können die genannten Daten auch gemeinsam über ein einziges Computernetzwerk übermittelt werden.

Die innerhalb der zentralen Steuereinrichtung 24 von dem Überwachungsmodul 28 empfangenen Daten der Zustandsüberwachung werden der Steuerung 26 der zentralen Steuereinrichtung 24 zur Verfügung gestellt. Diese kann daraufhin unmittelbar eine Fahrplanänderung veranlassen. Gleichzeitig werden die Daten von dem Überwachungsmodul 28 an das Berichtswesenmodul 30 weitergeleitet, welches ebenfalls mit der Steuerung 26 verbunden ist, um Informationen über die Fahrpläne zu erhalten. Auf dieser Grundlage erstellt das Berichtswesenmodul 30 einen Bericht, der die Vorgaben eines Fahrplans und die von der Überwachungseinrichtung 42 zur Verfügung gestellten Daten miteinander vergleicht und einen Bericht über die festgestellten Abweichungen erstellt. Dieser Bericht wird über ein Computernetzwerk 52 dem Betreiber 12 der Energieerzeugungsanlage 10 zur Verfügung gestellt.

Als weitere Möglichkeit der Erstellung von Fahrplanvorschlägen und der Einflussnahme auf die Fahrpläne ist in der Figur 2 eine weitere Eingabeeinrichtung gezeigt, die wiederum im Wesentlichen aus einem Intemetbrowser 54 besteht. Sie umfasst ein Web-Interface 56 und einen Gruppenfahrplanvorschlag 58, der eine Vielzahl einzelner Fahrplanvorschläge bündelt und eine Gruppe von Energieerzeugungsanlagen betrifft, die von einer übergeordneten Koordinierungsstelle 60 betrieben werden. Diese übergeordnete Koordinierungsstelle 60 hat die Möglichkeit, selbst Gruppenfahrplanvorschläge 58 zu erstellen oder diese zu ändern. Die Gruppenfahrplanvorschläge 58 werden wiederum über ein Computernetzwerk 62 an die zentrale Steuereinrichtung 24 übermittelt. Der von dem Berichtswesenmodul 30 erstellte Bericht wird über ein weiteres Computernetzwerk 64 auch an die übergeordnete Koordinierungsstelle 60 weitergeleitet.

## Patentansprüche

1. Verfahren zur Nutzung erneuerbarer Energiequellen mit
• mindestens einer dezentralen Energieerzeugungsanlage (10), die mit einer erneuerbaren Energiequelle betreibbar ist,
• einer Ertragsmesseinrichtung (102, 42) am Ort der mindestens einen dezentralen Energieerzeugungsanlage (10), die den Ertrag der mindestens einen dezentralen Energieerzeugungsanlage misst,
• einer zentralen Steuereinrichtung (24),
wobei das Verfahren die folgenden Schritte aufweist:
a) Erstellen einer Ertragsprognose (100, 20) für den Ertrag der mindestens einen dezentralen Energieerzeugungsanlage (10) in einem zukünftigen Zeitraum,
b) Übermitteln der Ertragsprognose (100, 20) an die zentrale Steuereinrichtung (24) über ein Computernetzwerk (104, 22),
c) Betreiben der dezentralen Energieerzeugungsanlage (10) und Messen des Ertrags mit der Ertragsmesseinrichtung (102, 42),
d) Vergleichen des gemessenen Ertrags mit der Ertragsprognose (100, 20),
e) Benachrichtigen eines Betreibers (12) der mindestens einen Energieerzeugungsanlage (10), falls der gemessene Ertrag über ein vorgebbares Maß hinaus von der Ertragsprognose (100, 20) abweicht.

2. Verfahren nach Anspruch 1, **dadurch gekennzeichnet, dass** die Ertragsprognose (100, 20) von einer Person erstellt wird, die für den Betrieb der mindestens einen dezentralen Energieerzeugungsanlage (10) vor Ort verantwortlich ist.

3. Verfahren nach Anspruch 1 oder 2, **dadurch gekennzeichnet, dass** die Ertragsprognose (100, 20) mit Hilfe eines Computernetzwerkes erstellt wird.

4. Verfahren nach einem der Ansprüche 1 bis 3, **dadurch gekennzeichnet, dass** die Ertragsprognose (100, 20) eine zu erzeugende Wirk- und/oder Blindleistung und/oder zu erbringende Netzsystemdienstleistungen umfasst.

5. Verfahren nach einem der Ansprüche 1 bis 4, **dadurch gekennzeichnet, dass** das Vergleichen des gemessenen Ertrages mit der Ertragsprognose (100, 20) am Ort der mindestens einen dezentralen Energieerzeugungsanlage (10) erfolgt.

6. Verfahren nach einem der Ansprüche 1 bis 5, **dadurch gekennzeichnet, dass** die zentrale Steuereinrichtung (24) auf Grundlage der Ertragsprognose (20) einen Fahrplan (32) für die mindestens eine dezentrale Energieerzeugungseinrichtung (10) erstellt, der Fahrplan (32) von der zentralen Steuereinrichtung (24) über ein Computernetzwerk (34) an eine dezentrale Steuereinheit (36) übermittelt wird, die die mindestens eine dezentrale Energieerzeugungsanlage (10) automatisch nach Maßgabe des Fahrplans (32) steuert.

7. Verfahren nach einem der Ansprüche 1 bis 6, **dadurch gekennzeichnet, dass** bei der Erstellung des Fahrplans (32) in der zentralen Steuereinrichtung (24) ein Vergleich der Ertragsprognose (20) mit einem prognostizierten Bedarf erfolgt und der Fahrplan (32) gegebenenfalls abweichend von der Ertragsprognose (20) an den prognostizierten Bedarf angepasst erstellt wird.

8. Verfahren nach einem der Ansprüche 1 bis 7, **dadurch gekennzeichnet, dass** die dezentrale Steuereinheit eine Überwachungseinrichtung (42) aufweist, die Betriebsdaten (44) und/oder Umgebungsbedingungen (46) der mindestens einen dezentralen Energieerzeugungsanlage (10) überwacht und über ein Computernetzwerk (48, 50) an die zentrale Steuereinrichtung (24) übermittelt.

9. Verfahren nach einem der Ansprüche 1 bis 8, **dadurch gekennzeichnet, dass** eine Vielzahl von dezentralen Energieerzeugungsanlagen (10) vorhanden sind, die mit erneuerbaren Energiequellen betrieben werden, wobei eine entsprechende Anzahl von Ertragsprognosen (100, 20) und/oder Fahrplänen (32) erstellt wird.

10. Verfahren nach Anspruch 8 oder 9, **dadurch gekennzeichnet, dass** keine Benachrichtigung des Betreibers (12) erfolgt, wenn anhand der von der Überwachungseinrichtung (42) übermittelten Daten eine Ursache für die Abweichung des gemessenen Ertrags von der Ertragsprognose (20) bzw. von einem auf Grundlage der Ertragsprognose (20) erstellten Fahrplan (32) erkennbar ist, auf die der Betreiber (12) keinen Einfluss hat.

11. Verfahren nach einem der Ansprüche 8 bis 10, **dadurch gekennzeichnet, dass** ein Fahrplan (32) angepasst wird, wenn der Vergleich eines gemessenen Ertrags und/oder der von der Überwachungseinrichtung (42) überwachten Betriebsdaten (44) mit einer Ertragsprognose (100, 20) bzw. einem auf Grundlage der Ertragsprognose (100, 20) erstellten Fahrplan (32) Abweichungen aufzeigt.

12. System zur Nutzung erneuerbarer Energiequellen mit
• mindestens einer dezentralen Energieerzeugungsanlage (10), die mit einer erneuerbaren Energiequelle betreibbar ist,
• einer Ertragsmesseinrichtung (102) am Ort der mindestens einen dezentralen Energieerzeugungsanlage (10), die den Ertrag der mindestens einen dezentralen Energieerzeugungsanlage (10) misst,
• einer Einrichtung (16, 18) zum Erfassen einer Ertragsprognose (100, 20) für den Ertrag der mindestens einen dezentralen Energieerzeugungsanlage (10) in einem zukünftigen Zeitraum,
• einer Einrichtung zum Übermitteln der Ertragsprognose (100, 20) an die zentrale Steuereinrichtung (24) über ein Computernetzwerk (104, 22),
• einer Einrichtung zum Vergleichen des gemessenen Ertrags mit der Ertragsprognose (100, 20),
• einer Einrichtung zum Benachrichtigen eines Betreibers (12) der mindestens einen Energieerzeugungsanlage (10), die so ausgebildet ist, dass automatisch eine Benachrichtigung des Betreibers (12) erfolgt, falls der gemessene Ertrag über ein vorgebbares Maß hinaus von der Ertragsprognose (100, 20) abweicht.

13. System nach Anspruch 12, **dadurch gekennzeichnet, dass** die mindestens eine dezentrale Energieerzeugungsanlage (10) eine Biogasanlage ist und/oder dass eine Vielzahl von dezentralen Energieerzeugungsanlagen (10) vorhanden sind, die mit erneuerbaren Energiequellen betreibbar sind.

14. System nach Anspruch 12 oder 13, **dadurch gekennzeichnet, dass** die zentrale Steuereinrichtung (24) zur Erstellung eines Fahrplans (32) auf Grundlage der Ertragsprognose (20) ausgebildet ist, und eine Einrichtung zum Übermitteln des Fahrplans (32) an eine dezentrale Steuereinheit (36) über ein Computernetzwerk (34) vorhanden ist, die zur automatischen Steuerung der mindestens einen dezentralen Energieerzeugungsanlage (10) nach Maßgabe des Fahrplans (32) ausgebildet ist.

15. System nach Anspruch 14, **dadurch gekennzeichnet, dass** die dezentrale Steuereinheit (36) eine Überwachungseinrichtung (42) aufweist, die mit der dezentralen Energieerzeugungsanlage (10) und/oder mit Sensoren verbunden ist und zur Überwachung von Betriebsdaten (44) und/oder Umgebungsbedingungen (46) der mindestens einen dezentralen Energieerzeugungsanlage (10) ausgebildet ist.

16. System nach Anspruch 15, **dadurch gekennzeichnet, dass** die Überwachungseinrichtung (42) über ein Computernetzwerk (48, 50) mit der zentralen Steuereinrichtung verbindbar ist und zur Übermittlung der überwachten Betriebsdaten (44) und/oder Umgebungsbedingungen (46) an die zentrale Steuereinrichtung (24) ausgebildet ist.
